(19) Europäisches Patentamt
European Patent Office
Office européen des brevets

(11) Numéro de publication: **0 216 681**
**A1**

# (12) DEMANDE DE BREVET EUROPEEN

(21) Numéro de dépôt: 86401903.9

(22) Date de dépôt: 29.08.86

(51) Int. Cl.[4]: C 07 F 9/40
D 21 H 3/02

(30) Priorité: 03.09.85 FR 8513054

(43) Date de publication de la demande:
01.04.87 Bulletin 87/14

(84) Etats contractants désignés:
AT BE CH DE FR GB IT LI LU NL SE

(71) Demandeur: MANUFACTURE DE PRODUITS CHIMIQUES PROTEX Société anonyme dite:
2, place Joffre
Paris 7ème, Seine(FR)

(72) Inventeur: Aymard, Alain
La Boisselière
F-37110 Chateau Renault(FR)

(72) Inventeur: Veaute, Georges
9 rue Vaubrahan
F-37110 Chateau Renault(FR)

(74) Mandataire: Colas, Jean-Pierre et al,
Cabinet de Boisse 37, avenue Franklin Roosevelt
F-75008 Paris(FR)

## (54) Procédé de préparation de nouveaux agents dispersants cationiques.

(57) Procédé de préparation d'un nouvel agent dispersant cationique, soluble dans l'eau.

Il consiste à cationiser un composé phosphoné contenant dans sa molécule des groupes acide phosphonique libres et un groupe hydroxyle, par condensation de ce composé avec un composé contenant un atome d'azote quaternaire et un groupe réactif avec un groupe acide phosphonique du composé phosphoné.

Application aux industries papetières et aux peintures.

EP 0 216 681 A1

Procédé de préparation de nouveaux agents dispersants cationiques

L'invention a pour objet la préparation d'agents de dispersion cationiques nouveaux solubles dans l'eau et possède des proprietes dispersantes remarquables vis-à-vis des charges ou pigments.

Plus particulièrement l'invention concerne un procédé de préparation d'un nouvel agent dispersant cationique, soluble dans l'eau, caractérisé en ce qu'il consiste à cationiser un composé phosphoné contenant dans sa molécule des groupes acide phosphonique libres et un groupe hydroxyle par condensation de ce composé avec un composé contenant un atome d'azote quaternaire et un groupe réactif avec un groupe acide phosphonique du composé phosphoné.

L'invention concerne aussi les nouveaux agents dispersants cationiques ainsi produits et leurs utilisations, notamment dans les industries papetières, textiles et des peintures.

Les agents dispersants produits par le procédé de l'invention présentent l'avantage d'être non mouillants

(des essais réalisés suivant le test décrit dans AATCC n° 17. 1980, font apparaître pour des concentrations de produit de 1 à 50 g/l, des temps de mouillage supérieurs à 15 mn), et également non moussants, ce qui les rend aptes à l'utilisation dans de nombreuses industries où ces qualités sont exigées pour les agents dispersants.

Par rapport aux agents dispersants classiques généralement de type anionique tels que les sels de sodium de polyélectrolyte carboxylés, des types polyacrylates ou polyméthacrylates de sodium à bas poids moléculaires, polyphosphates, lignosulfonates ou sels alcalins d'acides alkyl aryl sulfoniques polymères, tels que le polynaphtalène sulfonate de sodium, l'utilisation de produits dispersants cationiques présente un intérêt dans de nombreuses industries telles que l'industrie du papier, l'industrie textile ou encore l'industrie des peintures.

Dans les industries papetières, la dispersion de charges solides telles que le carbonate de calcium, le kaolin, l'argile, l'oxyde de titane, le talc, etc., est très courante que ce soit dans la pâte à papier lors de la réalisation de la feuille, ou que ce soit à la surface de la feuille lors de l'application de sauce de couchage. L'utilisation d'un agent de dispersion cationique présente l'avantage de ne pas perturber la rétention des charges dans la feuille et permet également l'utilisation, dans les sauces de couchage, de liants cationiques recherchés pour l'obtention d'aspects de surface excellents.

Les agents dispersants cationiques produits par l'invention, conviennent très bien dans cette application et présentent par rapport à d'autres dispersants cationiques connus, tels que ceux contenant des groupes amines,

l'avantage de ne pas modifier le point de blanc final du papier.

Un autre avantage des nouveaux agents dispersants obtenus tient à leur faible poids moléculaire qui leur confère une bonne efficacité comme agent de mise en suspension des poix lors de la fabrication de la feuille.
Ces poix qui sont des agglomérats d'acides résiniques ou des dérivés de lignine viennent se déposer sur la feuille provoquant des irrégularités et pouvant même entraîner des déchirements par collage aux cylindres lors du séchage du papier. Les produits de l'invention à des doses de 0,1 à 0,2% évitent la formation d'agglomérats et suppriment, de ce fait, les défauts cités plus haut.

L'utilisation des nouveaux agents de dispersion cationiques est également avantageuse par suite du pouvoir fluidifiant élevé qu'ils présentent vis-à-vis de dispersions contenant une forte teneur en pigment. C'est le cas dans les sauces de couchage du papier ou encore dans les peintures. L'utilisation des nouveaux agents dispersants permet de transformer des pâtes très visqueuses impossibles à mettre en jeu en liquides pompables et ceci sans modification de la concentration.

Dans les peintures, l'utilisation des nouveaux agents de dispersions cationiques comme aides de broyage permet de réduire le temps de broyage des matériaux solides et d'obtenir des particules plus fines.

Des exemples de dérivés phosphonés qui conviennent pour la préparation des produits selon l'invention sont des composés acides alkyl phosphoniques ayant la formule:

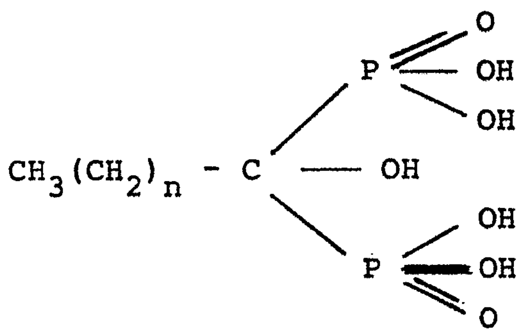

où n vaut de 0 à 12.

Des exemples de composés réactifs à atome d'azote quaternaire sont les suivants:

Halogénures de 2,3-époxypropyl-trialkyl-ammonium répondant à la formule générale:

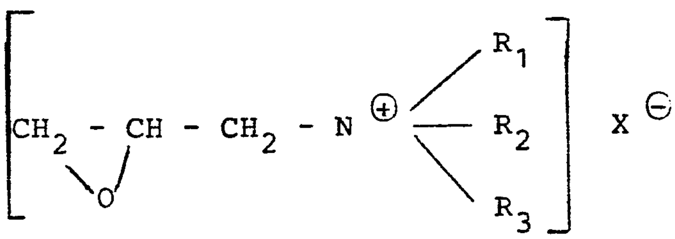

où X représente un anion bromure ou chlorure, et $R_1$, $R_2$ et $R_3$ sont des radicaux alkyle, identiques ou différents, possédant de 1 à 4 atomes de carbone.

Halogénures de 3-halogéno-2-hydroxy-propyltrialkyl-ammonium répondant à la formule générale:

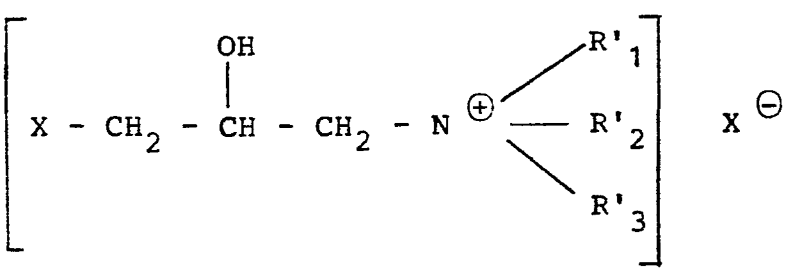

où X représente un anion bromure ou chlorure, et $R'_1$, $R'_2$ et $R'_3$ sont des radicaux alkyle, identiques ou différents possédant de 1 à 4 atomes de carbone.

Halogénures de 2,3-époxypropyl-alkyl-morpholinium de la formule générale:

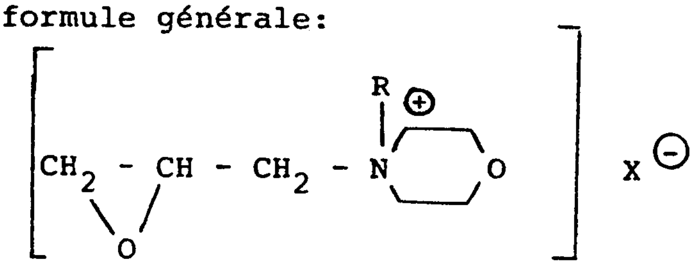

où X représente un anion bromure ou chlorure, et R est un radical méthyle ou éthyle.

Halogénures de 3-halogéno-2-hydroxypropyl-alkyl-morpholinium de la formule générale:

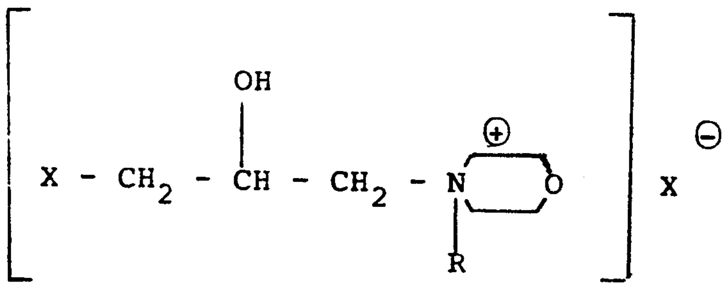

où X représente un anion bromure ou chlorure, et R est un radical méthyle ou éthyle.

Halogénures de 2,3-époxypropyl-dialkylcyclohexylammonium de la formule générale:

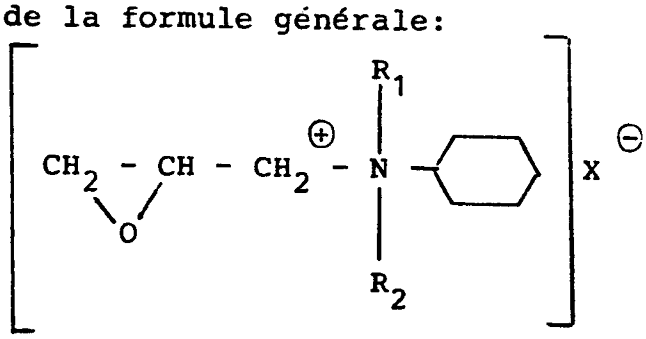

où X représente un anion bromure ou chlorure, et R est un radical méthyle ou éthyle.

**Halogénures de 3-halogéno-2-hydroxypropyl-dialkylcyclohexyl-ammonium de la formule générale:**

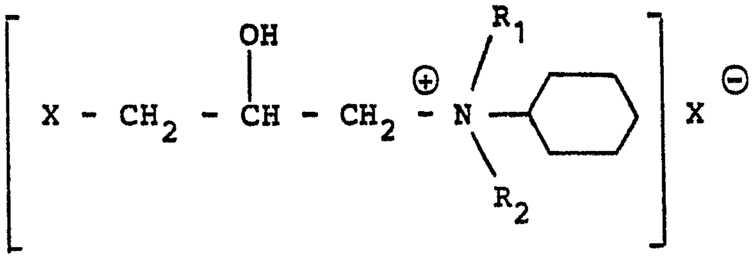

où X représente un anion bromure ou chlorure, et R est un radical méthyle ou éthyle.

La quantité de composé réactif à atome d'azote quaternaire ajoutée, doit correspondre à une addition d'au moins 1 équivalent de groupe réactif par équivalent acide phosphonique. On a observé que le composé réactif ne réagit que sur l'un des groupes acides phosphoniques, probablement pour des raisons d'encombrement stérique.

La réaction s'effectue facilement en chauffant les deux composés de départ jusqu'à obtention d'un produit de réaction parfaitement soluble dans l'eau. Par exemple, à 100°C, la réaction est relativement rapide puisqu'elle ne demande qu'un temps de chauffage de 1 à 6 heures. Les produits ainsi obtenus peuvent directement être utilisés comme agents de dispersion.

Les exemples non limitatifs suivants illustrent la préparation des agents dispersants cationiques selon l'invention et leurs applications. Les exemples ont été suivis par résonance magnétique nucléaire avec sonde phosphore ce qui permet de suivre parfaitement la condensation du groupe réactif sur le composé phosphoné hydroxylé.

Exemple 1

On charge dans un réacteur en verre équipé d'un condenseur et d'un thermomètre, 315 parties en poids d'une solution aqueuse à 55% d'acide hydroxyéthane disphosphonique, on chauffe à 50°C, puis on ajoute en 10 minutes 110 parties en poids de chlorure de 2,3-époxypropyltriméthylammonium. On maintient 2 h à 50°C, puis on chauffe pendant 5 h à 100-105°C. On suit l'avancement de la réaction par RMN phosphore.

On obtient 425 parties de dispersant cationique liquide ayant un extrait sec de 70% et répondant à la formule:

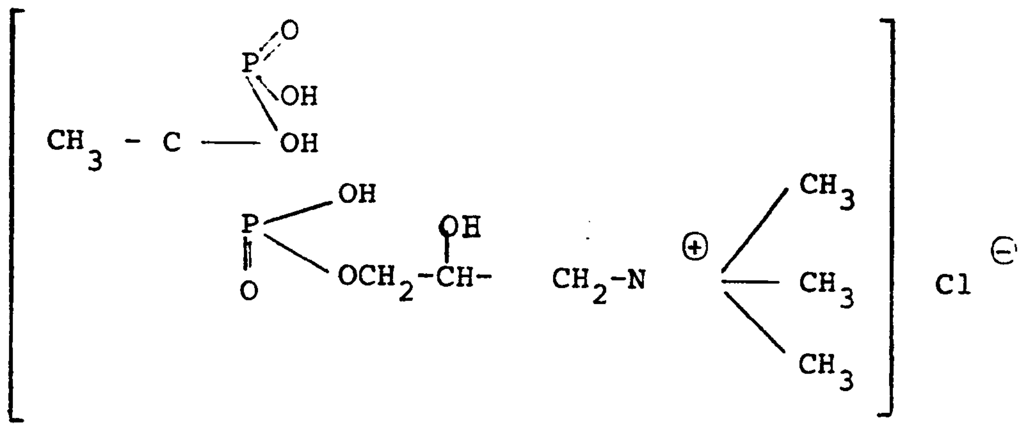

dont la structure est confirmée par la RMN.

Exemple 2

On charge dans un réacteur en verre équipé d'un agitateur, d'un condenseur et d'un thermomètre, 281 parties en poids d'acide hydroxy-butane-diphosphonique, 630 parties d'eau, on chauffe à 50°C puis on ajoute en 10 min.

145 parties en poids de chlorure de 2,3-époxypropyltriméthylammonium. On maintient pendant 4 h à 50°C, puis pendant 6 h à 100-105°C. On obtient alors 1054 parties d'agent dispersant cationique liquide.

Exemple 3

On opère dans les mêmes conditions que dans l'exemple 1, mais on remplace le chlorure de 2,3-époxypropyltriméthylammonium par 142 parties en poids de bromure de 2,3-époxypropyl-triméthylammonium. On obtient alors 456 parties d'agent dispersant cationique liquide.

Exemple 4

On opère de la même façon que dans l'exemple 1 si ce n'est qu'on remplace le chlorure de 2,3-époxypropyltriméthylammonium par 151 parties en poids de chlorure de 2,3-époxypropyl-triméthylammonium. On obtient 463 parties d'agent dispersant cationique liquide.

Exemple 5

L'agent dispersant préparé à l'exemple 1 a été essayé comme agent dispersant dans des sauces de couchage de papier à base de 67% en poids de carbonate de calcium et de 33% en poids d'eau. La mesure de la viscosité permet de contrôler l'efficacité dispersante du produit. Les viscosités données dans le tableau joint ont été mesurées au Viscosimètre Brookfield, type RVT. On a mesuré la viscosité de la dispersion à très faible vitesse (0,5 t/mn) (viscosité statique) et la viscosité de la dispersion soumise à une agitation de 100 t/min (viscosité dynamique).

Une comparaison a été réalisée entre le produit de l'invention et d'autres produits connus pour leur grande efficacité dispersante, tels que les produits cationiques à base de polyamino-amide cationique à haut poids moléculaire.

Le tableau ci-dessous fait apparaître l'efficacité supérieure du nouveau produit:

| % en poids d'agent dispersant par rapport au poids de pigment | Viscosité statique, cPo | | Viscosité dynamique, cPo | |
|---|---|---|---|---|
| | Produit de l'exemple 1 | Polyamino amide cationique* | Produit de l'exemple 1 | Polyamino amide cationique* |
| 0 % | 100 000 | 100 000 | 4 000 | 4 000 |
| 0,025% | 28 000 | 42 000 | 1 620 | 1 870 |
| 0,05% | 17 000 | 38 000 | 1 320 | 1 670 |
| 0,1% | 13 000 | 28 000 | 325 | 1 350 |
| 0,2% | 200 | 18 000 | 50 | 550 |
| 0,5% | 200 | 8 000 | 40 | 250 |

* (On trouve ce produit dans le commerce sous la dénomination "Surfaron" C 16-18)

L'efficacité dispersante des nouveaux agents de l'invention est également bonne vis-à-vis des pigments silico aluminates du type du Kaolin. Dans des sauces de couchage de papier à base de 62% en poids de Kaolin SPS, (provenant de ECC International à Paris) l'agent préparé à l'exemple 1 permet d'obtenir des dispersions compatibles avec les exigences industrielles.

| % en poids d'agent dispersant par rapport au poids du pigment | 0 | 0,33 | 0,66 | 1 |
|---|---|---|---|---|
| Viscosité statique en cPo | masse dure non mesurable | 160 000 | 88 000 | 16 800 |
| Viscosité dynamique, en cPo | masse dure non mesurable | 3 480 | 1 170 | 244 |

REVENDICATIONS

1. Procédé de préparation d'un nouvel agent dispersant cationique, soluble dans l'eau, caractérisé en ce qu'il consiste à cationiser un composé phosphoné contenant dans sa molécule des groupes acide phosphonique libres et un groupe hydroxyle, par condensation de ce composé avec un composé contenant un atome d'azote quaternaire et un groupe réactif avec un groupe acide phosphonique du composé phosphoné.

2. Procédé selon la revendication 1, caractérisé en ce que le composé phosphoné mis en jeu est un acide hydroxyalcane-diphosphonique de la formule

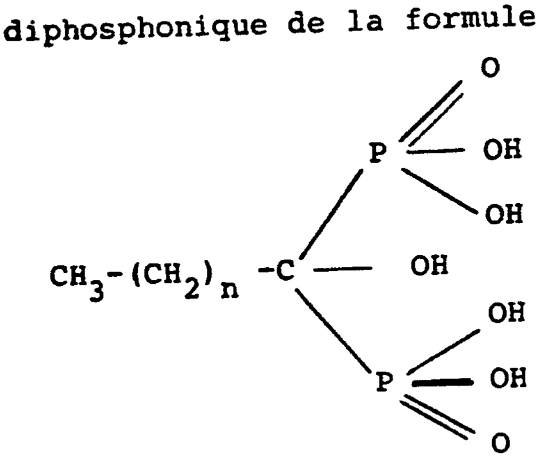

où n vaut de 0 à 12.

3. Procédé selon la revendication 1, caractérisé en ce que le composé à atome d'azote quaternaire est un composé contenant un groupe ammonium quaternaire.

4. Procédé selon l'une quelconque des revendications 1, 2 et 3, caractérisé en ce qu'on fait réagir sur le composé phosphoné, un halogénure de 2,3-époxypropyl-trialkylammonium ou un halogénure de 3-halogéno-2-hydroxypropyl-trialkylammonium à raison d'au moins

1 équivalent époxy ou halogéno par équivalent acide phosphonique.

5. Procédé selon l'une quelconque des revendications 1, 2 et 3, caractérisé en ce qu'on fait réagir sur le composé phosphoné, un halogénure de 2,3-époxypropyl-alkyl-morpholinium ou un halogénure de 3-halogéno-2-hydroxypropyl-alkyl-morpholinium à raison d'au moins 1 équivalent époxy ou halogéno par équivalent acide phosphonique.

6. Procédé selon l'une quelconque des revendications 1, 2 et 3, caractérisé en ce qu'on fait réagir sur le composé phosphoné un halogénure de 2,3-époxypropyl-dialkyl-cyclohexyl-ammonium ou un halogénure de 3-halogéno-2-hydroxypropyl-dialkyl-cyclo-hexyl-ammonium à raison d'au moins 1 équivalent époxy ou halogéno par équivalent acide phosphonique.

7. Nouveaux agents dispersants cationiques obtenus par un procédé selon l'une quelconque des revendications 1 à 6.

8. L'utilisation d'un agent dispersant selon la revendication 7 dans les industries du papier, des textiles ou des peintures.

0216681

Office européen des brevets

# RAPPORT DE RECHERCHE EUROPEENNE

Numero de la demande

EP 86 40 1903

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 201 441 (J.M. PETERSEN) * En entier * --- | 1,8 | C 07 F 9/40<br>D 21 H 3/02 |
| A | DE-A-2 737 410 (BENCKISER-KNAPSACK GmbH) * Revendications; pages 16,17, exemple B * ----- | 1,8 | |

| DOMAINES TECHNIQUES RECHERCHES (Int. Cl.4) |
|---|
| C 07 F |

Le présent rapport de recherche a été établi pour toutes les revendications

| Lieu de la recherche | Date d'achèvement de la recherche | Examinateur |
|---|---|---|
| LA HAYE | 04-12-1986 | BESLIER L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82